# EUROPÄISCHE PATENTANMELDUNG

(11) **EP 2 574 886 A2**
(43) Veröffentlichungstag der Anmeldung: **03.04.2013**
(21) Anmeldenummer: 12186604.0
(22) Anmeldetag: 28.09.2012
(51) Int. Cl.: G01G 13/00, G01G 23/10

(54) **Befüllvorrichtung sowie Verfahren zum Befüllen von Behältern**

(30) Priorität: 29.09.2011 DE 102011054038
(71) Anmelder: Krones AG, 93073 Neutraubling (DE)
(72) Erfinder: Angerer, Florian, 93073 Neutraubling (DE)
(74) Vertreter: Nordmeyer, Philipp Werner

(57) **Zusammenfassung**

Die vorliegende Erfindung bezieht sich auf eine Befüllvorrichtung (1) zum Befüllen von Behältern, bevorzugt zum Befüllen von Getränkebehältern, wie Glasbehälter, Kunststoffbehälter, Dosen und/oder Kartonagen, wobei die Befüllvorrichtung mindestens ein Maschinenelement (2) aufweist, an welchem eine Wiegevorrichtung (3) zum Messen des Gewichts des Behälters vorgesehen ist. Die Wiegevorrichtung (3) mit dem Maschinenelement (2) über einen Aktuator (4) zum Einbringen einer mechanischen Schwingung zur Vibrationskompensation verbunden ist.

## Beschreibung

### Technisches Gebiet

Die vorliegende Erfindung betrifft eine Befüllvorrichtung sowie ein Verfahren zum Befüllen von Behältern, bevorzugt von Getränkebehältern, wie Glasbehälter, Kunststoffbehälter, Dosen und/oder Kartonagen.

### Stand der Technik

Im Bereich der Befüllvorrichtungen für Behälter, insbesondere zum Befüllen von Getränkebehältern, wie beispielsweise Glasbehältern, Kunststoffbehältern, Dosen und/oder Kartonagen, sind unterschiedliche Befüllverfahren und entsprechend an diese Befüllverfahren angepasste Vorrichtungen bekannt.

Eine Klasse dieser Befüllvorrichtungen bilden die sogenannten Wiegefüller, bei welchen der eigentliche Befüllvorgang des jeweiligen Behälters unter anderem über eine Wiegevorrichtung gesteuert wird. Mittels der Wiegevorrichtung kann der jeweilige Füllungszustand des Behälters derart überwacht werden, dass nach der Befüllung mit Füllflüssigkeit ein exaktes Füllgewicht im Behälter aufgenommen ist. Wiegefüller sind für jegliche Arten der Behälterbefüllung geeignet. Sie bieten sich jedoch besonders zur Verwendung bei Füllflüssigkeiten an, bei denen eine reine Volumenabfüllung nicht zuverlässig zum gewünschten Ergebnis führt, da das spezifische Gewicht der jeweiligen Füllflüssigkeit für jede einzelne Befüllung oder jede Charge variiert. Dies kann beispielsweise bei Milchprodukten der Fall sein und ist insbesondere bei Produkten relevant, welche neben dem eigentlichen Flüssigvolumen auch festere Bestandteile aufweisen, so wie beispielsweise bei der Abfüllung von Fruchtjoghurts mit Fruchtstückchen. Beispielsweise bei Milchprodukten werden im Übrigen die jeweiligen Befüllgrößen auf den Verpackungen typischerweise nicht als Volumen, also beispielsweise in Litern oder Millilitern angegeben, sondern nach Gewicht, also in Gramm beziehungsweise in Kilogramm.

Wiegefüller eignen sich darüber hinaus jedoch auch zum Befüllen von Flaschen mit Getränken, da auch hier aus der Kenntnis des spezifischen Gewichts der Füllflüssigkeit auf das Befüllvolumen rückgeschlossen werden kann.

Wiegefüller arbeiten dabei nach dem Prinzip, dass zunächst der zu befüllende Behälter auf der jeweiligen Wiegevorrichtung platziert wird, dann dessen Gewicht bestimmt beziehungsweise die Wiegevorrichtung wieder auf Null gesetzt wird (sogenannte "Tara-Messung"), und dann mit der Befüllung des jeweiligen Behälters mit der jeweiligen Füllflüssigkeit begonnen wird, bis das gewünschte Füllgewicht erreicht ist.

Da Befüllvorrichtungen üblicherweise nicht vollständig isoliert betrieben werden können, sondern sich im Umfeld der jeweiligen Befüllvorrichtung weitere Maschinenkomponenten, wie beispielsweise Zuführvorrichtungen, Reinigungsvorrichtungen, Sterilisationsvorrichtungen, Etikettiervorrichtungen, Verschlussvorrichtungen und/oder weitere Komponenten einer vollständigen Getränkeverpackungsanlage befinden, wird auf die Wiegevorrichtung typischerweise eine Vielzahl von nicht erwünschten Schwingungen aufgebracht. Weitere nicht erwünschte Schwingungen können auch als anlagenfremde Schwingungen in die Wiegevorrichtung eingetragen werden, beispielsweise mittels Übertragung von Körperschall auf das Fundament der jeweiligen Befüllvorrichtung. Körperschall kann hier etwa über in entfernten Bereichen eingetragene Maschinenschwingungen oder durch vorbeifahrende Fahrzeuge wie beispielsweise Gabelstapler erzeugt und in die Befüllvorrichtung eingetragen werden. Die nicht erwünschten Schwingungen überlagern sich in der Wiegevorrichtung dem eigentlichen Nutzsignal, nämlich dem durch den dynamischen Füllvorgang in der Wiegevorrichtung erzeugten Wiegesignal. Für eine genaue Bewertung des von der Wiegevorrichtung ausgegebenen Wiegesignals ist es daher notwendig, den Einfluss der nicht erwünschten Schwingungen auf das Nutzsignal zu reduzieren oder gar zu eliminieren.

Eine Befüllvorrichtung zum Befüllen von Getränkebehältern innerhalb eines Karussellwiegefüllers mit einem Befüllerkarussell ist beispielsweise in der DE 10 2008 060 379 A1 beschrieben. Um den Einfluss der Maschinenschwingungen auf das Wiegeergebnis zu reduzieren, wird hier vorgeschlagen, die Wiegevorrichtung nahe einer Halterung für den jeweils zu befüllenden Behälter anzuordnen.

Eine Einrichtung zur elektronischen Schwingungskompensation ist in der DE 10 2008 062 972 A1 beschrieben, bei welcher die eigentliche Wiegevorrichtung neben dem Wiegesensor auch einen Beschleunigungssensor aufweist, wobei der Beschleunigungssensor Beschleunigungen der Wiegevorrichtung in einer vorbestimmten Richtung detektiert und ein aus diesem Beschleunigungssignal ermitteltes Kompensationssignal elektronisch vom Wiegesignal abgezogen wird, um ein weitgehend von Störgrößen bereinigtes Wiegesignal auf rechnerischem Wege bereit zu stellen.

Weiterhin ist es im Stand der Technik bekannt, zur Verringerung des Einflusses der nicht erwünschten Schwingungen auf die Auswertung des Wiegesignals das Wiegesignal mittels eines Tiefpassfilters zu filtern, wobei der Tiefpassfilter auf eine relativ niedrige Grenzfrequenz im Bereich von einigen Hz abgestimmt ist. Auf diese Weise werden sämtliche Signalkomponenten, die oberhalb der Grenzfrequenz des Tiefpassfilters liegen, im Wesentlichen aus dem Wiegesignal herausgefiltert und haben entsprechend keinen störenden Einfluss auf die Auswertung beziehungsweise Analyse des Wiegesignals mehr. Die Verwendung eines solchen Tiefpassfilters hat jedoch zwei Nachteile. Zum einen lässt sich die Grenzfrequenz nicht beliebig tief legen, da das den Tiefpass durchlaufende Signal zwangsläufig verzögert wird. Diese Verzögerung ist proportional zum Kehrwert des Filtergrenzwertes. Bei der Verwendung eines digitalen Filters kommen zu der durch den Tiefpass selbst hervorgerufenen Verzögerung noch die Verarbeitungszeiten in den jeweiligen Signalprozessoren hinzu, so dass sich bei der Verwendung eines Tiefpassfilters stets eine Verzögerung der Signalausgabe ergibt. Im Bereich tiefer Frequenzen werden so schnell Signallaufzeiten durch den digitalen Filter erreicht, welche für eine genaue Steuerung des eigentlichen Befüllvorganges nicht mehr akzeptabel sind. Bei unregelmäßigen Flaschengeometrien kann auch eine Extrapolation des verzögerten Wiegesignals nicht zu Ergebnissen führen, die eine zuverlässige Steuerung des Wiegefüllers ermöglichen könnten.

Ein zweiter Nachteil des Einsatzes von Tiefpassfiltern liegt darin, dass tatsächlich nur Störfrequenzen ausgefiltert werden können, welche oberhalb der Grenzfrequenz liegen. Störfrequenzen, welche im Bereich der Frequenz des Wiegesignals selbst liegen, können auf diese Weise nicht reduziert oder eliminiert werden, da sonst auch das Wiegesignal durch den Tiefpassfilter beeinflusst werden würde. Für den Fall, dass die eingetragenen Störgrößen genau im Bereich der Frequenz des Einschwingvorganges des Wiegesignals beziehungsweise genau im Bereich der Frequenz, welche durch den eigentlichen Befüllvorgang ausgelöst wird, liegen, kann der Einsatz eines Tiefpassfilters keinerlei Verbesserung der Genauigkeit der Auswertung des Wiegesignals unter Berücksichtigung des in der gleichen Frequenz vorliegenden Störsignals erreicht werden.

### Darstellung der Erfindung

Entsprechend ist es eine Aufgabe der vorliegenden Erfindung, eine Befüllvorrichtung sowie ein Verfahren zum Befüllen von Behältern anzugeben, bei welchem der Einfluss von Störgrößen reduziert wird.

Die Erfindung wird durch eine Befüllvorrichtung zum Befüllen von Behältern, bevorzugt zum Befüllen von Getränkebehältern, wie beispielsweise Glasbehälter, Kunststoffbehälter, Dosen und/oder Kartonagen, mit den Merkmalen des Anspruchs 1 gelöst. Vorteilhafte Weiterbildungen sind in den Unteransprüchen angegeben.

Entsprechend ist eine Befüllvorrichtung zum Befüllen von Behältern, bevorzugt zum Befüllen von Getränkebehältern, wie Glasbehälter, Kunststoffbehälter, Dosen und/oder Kartonagen vorgesehen, wobei die Befüllvorrichtung mindestens ein Maschinenelement aufweist, an welchem eine Wiegevorrichtung zum Wiegen des Behälters angeordnet ist. Erfindungsgemäß ist die Wiegevorrichtung mit dem Maschinenelement über einen Aktuator zum Einbringen einer mechanischen Schwingung zur Vibrationskompensation verbunden.

Mittels des Aktuators können auf diese Weise mechanische Schwingungen zwischen dem Maschinenelement und der Wiegevorrichtung eingebracht werden, die so bemessen sind, dass sie den Eintrag von Vibrationsschwingungen von dem Maschinenelement auf die Wiegevorrichtung reduzieren oder gar eliminieren. Da die Wiegevorrichtung durch den Aktuator im Wesentlichen von den Vibrationsschwingungen des Maschinenelements entkoppelt wird, ist das Wiegesignal im Wesentlichen unbeeinflusst von den Vibrationsschwingungen, so dass auf eine aufwendige Signalnachbearbeitung weitgehend verzichtet werden kann. Das Wiegesignal kann vielmehr direkt ausgewertet werden und zur Steuerung des Befüllvorgangs verwendet werden.

Durch das Einbringen mechanischer Schwingungen an der Schnittstelle zwischen dem Maschinenelement und der Wiegevorrichtung kann weiterhin erreicht werden, dass auch Vibrationsschwingungen, die im Bereich der Frequenz des Wiegesignals liegen, im Wiegesignal reduziert oder eliminiert werden können, so dass hier eine genauere Messung möglich wird.

Darüber hinaus kann auch beim Einsatz eines Tiefpassfilters eine höhere Grenzfrequenz gewählt werden, da gerade tieffrequente Vibrationsschwingungen mittels des Aktuators effizient kompensiert werden können. Entsprechend kann hier durch die höher gewählte Grenzfrequenz eine verringerte Signallaufzeit erreicht werden, wodurch die Genauigkeit der Steuerung des Befüllvorganges weiter verbessert werden kann.

Durch die Beaufschlagung des Aktuators mit einem entsprechenden Kompensationssignal kann erreicht werden, dass der Einfluss der Störgrößen, und insbesondere der Einfluss der von dem Maschinenelement der Befüllvorrichtung an die Wiegevorrichtung übertragenen Störschwingungen, auf die Wiegevorrichtung reduziert beziehungsweise vollständig eliminiert wird. Insbesondere beim Einleiten eines entsprechend phasenangepassten und amplitudenangepassten Kompensationssignals kann eine Reduktion der von dem Maschinenelement auf die Wiegevorrichtung übertragenen Vibrationsschwingungen erreicht werden. Die Vibrationsschwingungen des Maschinenelements werden so entsprechend durch das phasenverschobene, insbesondere phasenverkehrte Kompensationssignal, welches auf den Aktuator aufgebracht wird, bezüglich der Wiegevorrichtung reduziert beziehungsweise vollständig getilgt.

Durch die Verwendung des Aktuators zwischen dem Maschinenelement und der Wiegevorrichtung können darüber hinaus die bereits vorhandenen Wiegevorrichtungen sowie deren Auswertevorrichtungen und die bereits vorhandene Maschinensteuerung weiterverwendet werden, ohne dass hier Anpassungen vorgenommen werden müssten. Lediglich die Aufhängung beziehungsweise Anordnung der Wiegevorrichtung an dem Maschinenelement muss durch das Einfügen des Aktuators abgeändert werden. Eine Kompensationssteuerungsvorrichtung zum Betrieb des Aktuators, also ein Schaltkreis aus Aktuator, einem Vibrationssensor und der eigentlichen Kompensationssteuerungsvorrichtung, kann unabhängig von dem übrigen Steuer- und Regelmechanismus der Befüllvorrichtung ausgeführt werden, so dass diese Komponenten problemlos nachrüstbar sind.

Weiterhin kann durch die unmittelbare mechanische Kompensation der Vibrationsschwingungen, welche von dem Maschinenelement auf die Wiegevorrichtung übertragen werden, die Genauigkeit sowie die Dynamik des Wiegevorganges verbessert werden. Dadurch, dass eine Kompensation der Störschwingungen bereits vor der Aufnahme des eigentlichen Wiegesignals stattfindet, ist dieses Nutzsignal so wie es von der Wiegevorrichtung bereitgestellt wird, bereits im Wesentlichen von den Störgrößen bereinigt. Entsprechend sind hier auch keine weitergehenden Filterungen des Nutzsignals notwendig beziehungsweise ein eventuell dennoch vorgesehener Tiefpassfilter kann mit einer wesentlich höheren Grenzfrequenz betrieben werden, so dass die Signallaufzeiten durch den (digitalen) Filter deutlich reduziert werden können. Entsprechend kann durch das Bereitstellen der beschriebenen Vorrichtungen eine Befüllvorrichtung erreicht werden, welche zum einen genauere Messungen des Wiegevorganges ermöglicht, da die Störgrößen bereits vor der Aufnahme des Wiegesignals beziehungsweise des Nutzsignals reduziert beziehungsweise eliminiert werden, und zum anderen durch das Bereitstellen des auf diese Weise von Störgrößen bereinigten Wiegesignals ein verbessertes dynamisches Verhalten des Wiegevorganges in der Befüllvorrichtung zu erreichen, da die Signalverarbeitung des Wiegesignals vereinfacht wird.

Bevorzugt ist ein Vibrationssensor zum Messen der von dem Maschinenteil ausgeführten Vibrationsschwingungen vorgesehen, wobei der Vibrationssensor bevorzugt am Maschinenteil angeordnet ist. Durch das Vorsehen des Vibrationssensors an dem die Wiegevorrichtung tragenden Maschinenelement kann entsprechend ein Vibrationssignal ermittelt werden, welches den von dem Maschinenelement auf die Wiegevorrichtung übertragenen Vibrationsschwingungen entspricht. Das gemessene Vibrationssignal enthält im Wesentlichen alle Störfrequenzen, die von den übrigen Komponenten der Befüllvorrichtung auf die Wiegevorrichtung übertragen werden, da das Vibrationssignal bevorzugt direkt an dem die Wiegevorrichtung tragenden Maschinenelement gemessen wird. Es wird dabei davon ausgegangen, dass der Großteil oder gar sämtliche Vibrationsschwingungen, die das Wiegesignal nachteilig beeinflussen könnten, von dem die Wiegevorrichtung tragenden Maschinenelement ausgeführt werden.

Um den Aktuator steuern zu können, kann eine Kompensationssteuerungsvorrichtung vorgesehen sein, welche den Aktuator mit einem Kompensationssignal beaufschlagt, welches die vom Maschinenteil auf die Wiegevorrichtung übertragenen Vibrationsschwingungen reduziert. Mittels der Kompensationssteuerungsvorrichtung können beispielsweise die durch den Vibrationssensor gemessenen Vibrationsschwingungen, die das Wiegesignal negativ beeinflussen können, bei der Bestimmung des Kompensationssignals berücksichtigt werden, um die vom Maschinenteil auf die Wiegevorrichtung übertragenen Vibrationsschwingungen zu kompensieren. Das Kompensationssignal wird von der Kompensationssteuerungsvorrichtung zumindest so ausgebildet, dass eine Reduktion beziehungsweise eine vollständige Eliminierung des Einflusses der Vibrationsschwingungen des Maschinenelements auf das Wiegesignal erreicht wird.

Die Kompensationssteuerungsvorrichtung verwendet hierzu bevorzugt ein Kompensationssignal zur Kompensation, welches im Wesentlichen auf Grundlage des von dem Vibrationssensor gemessenen Vibrationssignals bestimmt wird. Bevorzugt ist die Kompensationssteuerungsvorrichtung dazu eingerichtet, das Vibrationssignal mit einer veränderten Phasenlage, bevorzugt um 180° phasenverschoben, als Kompensationssignal zu verwenden. In dieser Ausführungsform kann auf eine aufwendige und zeitintensive Signalverarbeitung und Signalfilterung im Wesentlichen verzichtet werden. Entsprechend wird auf diese Weise eine einfache und effiziente Vorrichtung zur Kompensation der durch die Vibrationsschwingungen des Maschinenelements eingetragenen Messungenauigkeiten des Wiegesignals angegeben.

In einer Weiterbildung ist die Kompensationssteuerungsvorrichtung dazu eingerichtet, das Vibrationssignal bezüglich der vorliegenden Störfrequenzen zu analysieren, bevorzugt mittels einer FFT-Analyse, und das Kompensationssignal auf Grundlage der analysierten Störfrequenzen zu bestimmen. Durch den Einsatz einer Analyse der Störfrequenzen kann das Kompensationssignal an die hauptsächlich das Wiegesignal verfälschenden Frequenzen angepasst werden. So kann bei gleichzeitiger Verbesserung der Füllgenauigkeit der Befüllvorrichtung die Belastung des Aktuators relativ gering gehalten werden.

Um die Belastung des Aktuators gering zu halten, kann die Kompensationssteuerungsvorrichtung einen Tiefpassfilter derart umfassen, dass das Vibrationssignal und/oder das Kompensationssignal den Tiefpassfilter durchläuft. Entsprechend werden höher frequente Vibrationskomponenten nicht an den Aktuator übertragen. Die an den Aktuator übertragene Energie kann dadurch reduziert werden und entsprechend hält sich die Wärmeentwicklung des Aktuators in Grenzen.

Um eine vollständige Eliminierung der von dem Maschinenelement auf die Wiegevorrichtung übertragenen Vibrationsschwingungen zu erreichen, kann die Kompensationssteuerungsvorrichtung das Kompensationssignal bezüglich seiner Phase, seiner Frequenz sowie seiner Amplitude dem von dem Maschinenteil ausgeführten Vibrationsmuster invers bestimmen. Wenn das Kompensationssignal zu einer Aktuatorbewegung führt, die genau invers zu den Vibrationsschwingungen ist, kommt es zu einer vollständigen Tilgung des Eintrags der Vibrationsschwingungen auf die Wiegevorrichtung. Mit anderen Worten kann so erreicht werden, dass die Vibrationsschwingungen des Maschinenelements das Wiegesignal nicht mehr beeinflussen.

Die oben genannte Aufgabe wird weiterhin durch ein Verfahren zum Befüllen von Behältern, bevorzugt zum Befüllen von Getränkebehältern, wie Glasbehälter, Kunststoffbehälter, Dosen und/oder Kartonagen, mit den Merkmalen des Anspruchs 9 gelöst. Vorteilhafte Weiterbildungen sind in den Unteransprüchen angegeben.

Die Genauigkeit der Messung kann durch die beschriebene Befüllvorrichtung beziehungsweise das beschriebene Verfahren weiterhin dadurch verbessert werden, dass durch die Kompensation der Vibrationsschwingungen bereits vor der eigentlichen Messung des Wiegesignals auch sich genau im Bereich oder genau auf der Frequenz des Wiegesignals befindende Störungen weitgehend reduziert beziehungsweise eliminiert werden können.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische Darstellung einer Befüllvorrichtung in einem exemplarischen Ausführungsbeispiel; und
- Figur 2: eine schematische Darstellung von an einem Maschinenelement gemessenen Störfrequenzen.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente mit identischen Bezugszeichen bezeichnet und auf eine wiederholte Beschreibung dieser Elemente wird teilweise verzichtet, um Redundanzen in der Beschreibung zu vermeiden.

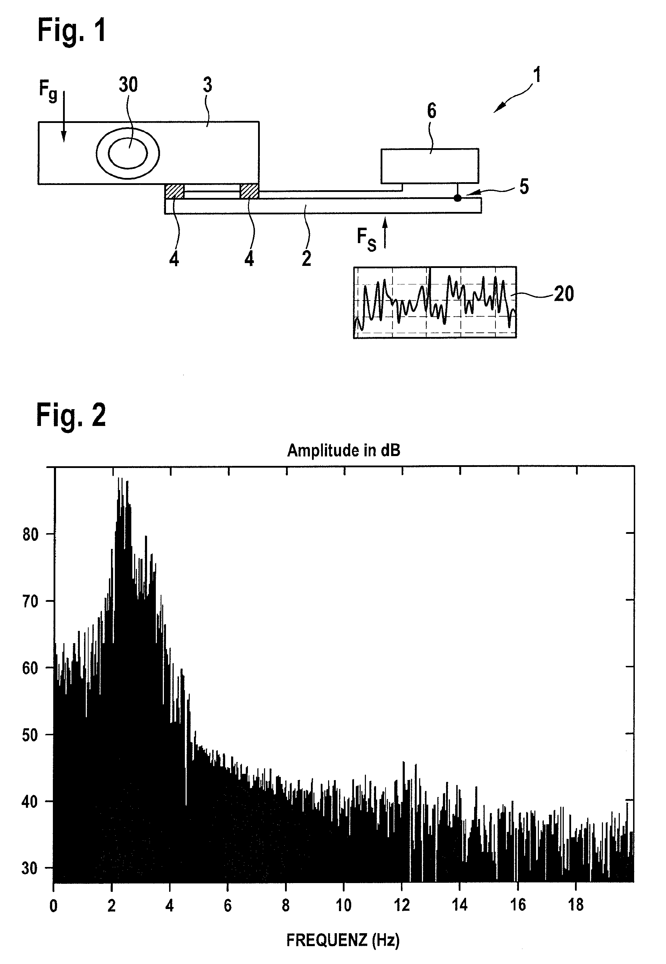

Figur 1 zeigt schematisch den Aufbau einer Befüllvorrichtung 1 gemäß einem Ausführungsbeispiel der vorliegenden Erfindung. Die Befüllvorrichtung 1 umfasst ein Maschinenelement 2, welches beispielsweise ein Haltearm für eine Wiegevorrichtung 3 in einem Wiegefüller ist. Das Maschinenelement 2 ist beispielsweise im unteren Bereich eines Befüllerkarussells angeordnet und mit den anderen Maschinenkomponenten des Befüllerkarussells fest verbunden. Das Maschinenelement 2 hält die Wiegevorrichtung 3, auf welcher die zu befüllenden Behälter während des Befüllvorganges aufgenommen werden. In einer Variante werden die Behälter dabei quasi auf der Wiegevorrichtung "abgestellt", wenn die Behälter von unten gestützt werden (sogenanntes "bottom handling" der Behälter). In der Wiegevorrichtung 3 wird das Gewicht der Behälter vor und während des Befüllvorganges mittels des in der Wiegevorrichtung 3 angeordneten Wiegesensors 30 bestimmt und auf diese Weise der Befüllvorgang gesteuert. Der Befüllvorgang wird entsprechend beendet, wenn das gewünschte Füllgewicht erreicht ist und entsprechend eine vorgegebene Menge an Befüllflüssigkeit in dem Behälter aufgenommen ist.

Die Wiegevorrichtung 3 kann aber nicht nur im unteren Bereich eines Befüllerkarussells angeordnet sein, sondern auch an einer Aufnahme, mittels der die zu befüllenden Behälter in deren Halsbereich gehalten werden (sogenanntes "neck handling" der Behälter).

Die Wiegevorrichtung 3 kann beispielsweise einen Wiegesensor 30 in Form eines Dehnungsmessstreifens, eines Drucksensors oder eines Wiegesensors auf Basis der elektrodynamischen Kraftkompensation aufweisen. Die Wiegevorrichtung 3 wird häufig auch als "Wiegezelle" bezeichnet. In der Wiegevorrichtung ist der Wiegesensor 30 derart mit einer Aufnahme für die zu befüllenden Behälter versehen, dass die Gewichtskomponente der Behälter voll auf den Wiegesensor 30 wirkt. Der zu befüllende Behälter sowie die Flüssigkeit, welche in den Behälter hinein gefüllt wird, beaufschlagen den Wiegesensor 30 entsprechend mit einer Kraftkomponente F_{g}, welche in Richtung der Erdbeschleunigung wirkt. Solche Wiegevorrichtungen 3 sind allgemein bekannt.

Das Maschinenelement 2 und die Wiegevorrichtung 3 sind über mindestens einen Aktuator 4 miteinander verbunden. Der Aktuator 4 kann beispielsweise in Form eines Servomotors, eines Quarzkristalles oder eines Piezokristalles vorgesehen sein. In der in Figur 1 gezeigten Ausführung ist die Wiegevorrichtung 3 über zwei Aktuatoren 4 mit dem Maschinenelement 2 verbunden, um eine bessere strukturelle Stabilität der Aufhängung zu erreichen. Beliebige andere Variationen der Anbindung der Wiegevorrichtung 3 an das Maschinenelement 2 sind denkbar. Es ist nur von Bedeutung, dass die Wiegevorrichtung 3 gegenüber dem Maschinenelement 2 mittels des Aktuators 4 bewegt werden kann.

Der Aktuator 4 stellt bevorzugt eine Amplitude bereit, welche zumindest in etwa im Bereich der üblicherweise durch das Maschinenelement 2 im Betrieb der Befüllvorrichtung 1 ausgeführten Schwingungsamplitude liegt. Weiterhin ist es bevorzugt, wenn der Aktuator 4 eine geringe Trägheit aufweist und entsprechend aufgebrachten Signalen mit geringer oder keiner Verzögerung folgen kann.

An dem Maschinenelement 2 ist ein Vibrationssensor 5 angeordnet, welcher die von dem Maschinenelement 2 im Betrieb ausgeführten beziehungsweise ausgeübten Vibrationen bezüglich Frequenz und Amplitude misst. Der Vibrationssensor 5 kann dabei bevorzugt in Form eines herkömmlichen Beschleunigungssensors vorgesehen sein. Als Vibrationssensor kann aber auch eine zweite Wiegevorrichtung mit einer Blindmasse an dem Maschinenelement 2 vorgesehen sein. In einer Variante ist der Vibrationssensor 5 als optischer, elektromagnetischer oder kapazitiver Sensor ausgebildet, welcher die Vibrationsschwingungen des Maschinenelements 2 auf optischem, elektromagnetischem oder kapazitivem Wege abtastet.

Eine Kompensationssteuerungsvorrichtung 6 ist vorgesehen, welche zur Bestimmung eines Kompensationssignals zur Kompensation der vom Maschinenelement 2 ausgeübten Vibrationen dient und welche dann den Aktuator 4 mit dem ermittelten Kompensationssignal beaufschlagt und entsprechend die Kompensation steuert.

Das Maschinenelement 2 führt während des Betriebs der Befüllvorrichtung 1 Vibrationsschwingungen aus, welche das Maschinenelement 2 entsprechend mit einer Kraft Fₛ beaufschlagen. Diese Vibrationsschwingungen sind in Figur 1 exemplarisch in dem mit dem Bezugszeichen 20 bezeichneten Diagramm gezeigt. Aus diesem Diagramm 20 ergibt sich sofort, dass die Vibrationen im Wesentlichen keinem festliegenden Muster folgen, sondern eher als eine Überlagerung unterschiedlicher, nicht kohärenter Schwingungen vorliegen. Dies ist auch einleuchtend, da die auf das Maschinenelement 2 aufgebrachten Schwingungen zum einen von der Befüllvorrichtung 1 selbst stammen können, beispielsweise durch abgenutzte Lager eines Befüllerkarussells, zum anderen aber durch die Schwingungen anderer Vorrichtungen, welche sich im näheren und ferneren Umkreis der Befüllvorrichtung befinden, eingetragen werden können. Weiterhin kann das Maschinenelement 2 selbst durch Resonanzen weiteren Schwingungseintrag verursachen. Durch die Übertragung von Körperschall, insbesondere auch über den Hallenboden, können weitere Störeinflüsse, beispielsweise durch vorbeifahrende Fahrzeuge wie Gabelstapler, oder durch in entfernten Bereichen eingebrachte Störschwingungen durch andere Vorrichtungen, auf das Maschinenelement 2 aufgebracht werden. Ebenso können die nicht erwünschten und störenden Schwingungen durch die Übergabe der zu befüllenden Getränkebehälter von einem Zuführstern an das Befüllkarussell oder der befüllten Getränkebehälter vom Befüllkarussell an einen Abführstern entstehen. Insbesondere beim neck handling, wenn die Getränkebehälter von einer Halteklammer einer ersten Einrichtung in die Halteklammer der darauf folgenden Einrichtung gedrückt werden oder dieser "entrissen" werden, kann die Getränkebehälterhalterung derart in Schwingung versetzt werden, dass beispielsweise der frühestmögliche Zeitpunkt für eine Tarierung der Wiegevorrichtung bzw. für den frühestmöglichen Befüllbeginn zeitlich nach hinten verschoben wird.

Die Kompensationssteuerungsvorrichtung 6 übernimmt das durch den Vibrationssensor 5 ermittelte Vibrationssignal als Grundlage zur Bestimmung eines Kompensationssignals, welches die auf die Wiegevorrichtung 3 übertragenen Vibrationsschwingungen reduzieren oder vollständig elliminieren soll. Das von der Kompensationssteuerungsvorrichtung 6 ermittelte Kompensationssignal wird dann zur Ansteuerung des Aktuators 4 verwendet, um eine mechanische Entkopplung zwischen dem Maschinenelement 2 und der Wiegevorrichtung 3 zu erreichen. Mit anderen Worten wird über den Aktuator 4 eine mechanische Tilgung der von dem Maschinenelement 2 ausgeführten Vibrationsschwingungen derart erreicht, dass die Vibrationsschwingungen vom Maschinenelement 2 nur abgeschwächt auf die Wiegevorrichtung 3 übertragen werden. Wenn der Aktuator 4 so angesteuert wird, dass er eine zu den Vibrationen um 180° phasenverschobene Bewegung ausführt, die sowohl in Frequenz als auch Amplitude der von dem Maschinenelement 2 ausgeübten Vibrationsschwingung entspricht, kann sogar eine vollständige Schwingungstilgung erreicht werden und der Einfluss der Vibrationsschwingungen auf die Wiegevorrichtung 3 wird vollständig eliminiert.

In einem besonders einfach gelagerten Vorgehen wird in der Kompensationssteuerungsvorrichtung 6 lediglich das vom Vibrationssensor 5 ermittelte Vibrationssignal phasenangepasst, also beispielsweise um 180 Grad gedreht, und direkt an den Aktuator 4 weitergeleitet. Eine Signalverzögerung, wie sie beispielsweise durch eine Filterung oder eine andere (digitale) Signalbearbeitung eingetragen werden würde, ergibt sich hierdurch entsprechend nicht, da bei dieser einfachen Variante keinerlei Signalverarbeitung stattfindet. Der Aktuator 4, wenn er entsprechend bezüglich seiner Amplitude justiert ist, bringt dann die vom Vibrationssensor 5 ermittelten Vibrationsschwingungen phasenverkehrt an der Verbindung des Maschinenelements 2 mit der Wiegevorrichtung 3 ein. Auf diese Weise können die vom Maschinenelement 2 auf die Wiegevorrichtung 3 ausgeübten Störschwingungen deutlich reduziert, wenn nicht gar vollständig getilgt werden. Es findet also eine aktive Schwingungstilgung am Übergang zwischen dem Maschinenelement 2 zur Wiegevorrichtung 3 statt.

In alternativen Ausführungsformen kann die Kompensationssteuerungsvorrichtung 6 so gestaltet sein, dass sie aus dem vom Vibrationssensor 5 ermittelten Vibrationssignal bestimmte Muster herausfiltert, welche dann auf den Aktuator 4 übertragen werden. Hier sind besonders Schwingungen von Bedeutung, welche im Bereich der Frequenz des Wiegesignals der Wiegevorrichtung 3 liegen. Solche Störkomponenten können beispielsweise über eine Analyse des Vibrationssignals, welches von dem Vibrationssensor 5 gemessen wird, ermittelt werden. Hierzu bietet sich beispielsweise eine Analyse des Vibrationssignals mittels einer Fast-Fourier-Transformation (FFT) an. Typischerweise liegen die Frequenzen des eigentlichen Wiegesignals relativ niedrig, also im Bereich weniger Hz. Entsprechend ist eine Analyse des Vibrationssignals und eine entsprechende Beaufschlagung des Aktuators 4 mit dem ermittelten und invertierten Störsignal in diesem Bereich besonders wirkungsvoll, da hier mit einer Tiefpassfilterung des Wiegesignals keine Verbesserung der Auswertung des Wiegesignals erreicht werden könnte.

Figur 2 zeigt schematisch das Ausgangssignal eines Vibrationssensors 5, welcher an einem exemplarischen Maschinenelement 2 einer Befüllvorrichtung 1 angeordnet ist. Aus dem Diagramm ergibt sich sofort, dass ein Schwerpunkt der Störfrequenzen im Bereich von 2 Hz liegt. Es ist sofort erkennbar, dass aufgrund der starken eingebrachten Störfrequenzen, die im Bereich von 2 Hz liegen, das Wiegesignal einer Wiegevorrichtung 3, welche eine Einschwingzeit im Bereich von 2 Hz aufweist, stark beeinflusst ist. Auch wenn der dynamische Füllvorgang eines Behälters in einem Zeitfenster von 2 Hz, also ungefähr innerhalb einer halben Sekunde, stattfindet, ist die Auswertung des entsprechenden Wiegesignals durch die eingetragenen Störfrequenzen deutlich behindert. Weiterhin ergibt sich hieraus auch sofort, dass, wenn das Wiegesignal im Bereich von 2 Hz liegt, eine Tiefpassfilterung nicht zum gewünschten Ergebnis führen kann, da der Vibrationsanteil mittels des Tiefpassfilters in dem relevanten Bereich nicht ausgefiltert werden kann, ohne auch das Wiegesignal zu beeinflussen.

Eine weitgehende mechanische Entkopplung der Wiegevorrichtung 3 von den Vibrationsschwingungen des Maschinenelementes 2 mittels des Aktuators 4 ermöglicht hier jedoch eine genauere Messung und damit eine genauere Auswertung des von der Wiegevorrichtung 3 ausgegebenen Wiegesignals.

Die in Figur 1 gezeigte Ausführungsform der Erfindung ermöglicht es, beispielsweise das in Figur 2 gezeigte Schwingungsprofil und insbesondere die niederfrequenten Schwingungen, welche über den Vibrationssensor 5 gemessen wurden, in den entsprechenden Aktuator 4 so einzubringen, dass diese Schwingungen, die beispielsweise über ein Maschinenelement 2 aufgebracht sind, nicht an die jeweilige Wiegevorrichtung 3 beziehungsweise den Wiegesensor 30 weitergegeben werden.

Um eine Überforderung des Aktuators 4 und entsprechend eine Überhitzung des Aktuators 4 zu vermeiden, können auch nur ausgesuchte Frequenzen über den Aktuator 4 eingetragen werden. Insbesondere ist es von Vorteil, hochfrequente Anteile, die mittels eines Tiefpassfilters, welcher mit einer relativ hohen Grenzfrequenz abgestimmt ist und entsprechend nur eine geringe Laufzeitverzögerung des Signals bewirkt, nicht auf den Aktuator aufzubringen.

Eine Alternative liegt darin, mittels einer Fast-Fourier-Transformation (FFT) das Vibrationssignal, welches vom Vibrationssensor 5 geliefert wird, entsprechend so zu analysieren, dass die stärksten störenden Frequenzen festgestellt werden und diese um 180 Grad phasenversetzt zum ursprünglichen Vibrationssignal auf den Aktuator 4 aufzubringen.

Entsprechend wird beispielsweise am Fußpunkt der Wiegevorrichtung 3 eine mechanische Schwingung eingeleitet, welche dem von einem Maschinenelement 2 eingeleiteten Störsignal entgegenwirkt. Entsprechend wird die Wiegevorrichtung 3 aktiv über den Aktuator 4 vom Maschinenelement 2, und damit von der gesamten Befüllvorrichtung, beispielsweise einem Maschinenkarussell, entkoppelt.

Die am Fußpunkt der Wiegevorrichtung 3 angeordneten Aktuatoren 4 sind bevorzugt Piezo-Oszillatoren. Der Vibrationssensor 5 beziehungsweise Beschleunigungssensor kann ebenso als Piezo-Beschleunigungssensor ausgebildet sein.

Das aufgezeichnete Störsignal beziehungsweise Vibrationssignal, welches über den Vibrationssensor 5 aufgenommen ist, wird dann mit Hilfe einer FFT-Analyse in sein Frequenzspektrum zerlegt und die stärksten störenden Frequenzen festgestellt. Da diese Störungen gewöhnlich periodisch auftreten, kann der Aktuator 4 in Form des Piezo-Oszillators nun mit einem Signal beaufschlagt werden, welches Frequenzen enthält, die um 180 Grad phasenversetzt zum Messsignal liegen, und entsprechend die Störfrequenzen kompensieren.

Die Kompensationssteuerungsvorrichtung 6 übernimmt dabei das Einlesen sowie die Verarbeitung und Analyse des Störsignals und stellt die entsprechenden Ansteuersignale für den Piezo-Oszillator bereit.

Soweit anwendbar, können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezugszeichenliste

- 1: Befüllvorrichtung
- 2: Maschinenelement
- 20: schematische Darstellung eines Vibrationssignals
- 3: Wiegevorrichtung
- 30: Wiegesensor
- 4: Aktuator
- 5: Vibrationssensor
- 6: Kompensationssteuerungsvorrichtung

## Patentansprüche

1. Befüllvorrichtung (1) zum Befüllen von Behältern, bevorzugt zum Befüllen von Getränkebehältern, wie Glasbehälter, Kunststoffbehälter, Dosen und/oder Kartonagen, wobei die Befüllvorrichtung mindestens ein Maschinenelement (2) aufweist, an welchem eine Wiegevorrichtung (3) zum Wiegen des Behälters vorgesehen ist,
**dadurch gekennzeichnet, dass**
die Wiegevorrichtung (3) mit dem Maschinenelement (2) über einen Aktuator (4) zum Einbringen einer mechanischen Schwingung zur Vibrationskompensation verbunden ist.

2. Befüllvorrichtung (1) gemäß Anspruch 1, **dadurch gekennzeichnet, dass** ein Vibrationssensor (5) zum Messen der von dem Maschinenelement (2) ausgeführten Vibrationsschwingungen vorgesehen ist, wobei der Vibrationssensor (5) bevorzugt am Maschinenelement (2) angeordnet ist.

3. Befüllvorrichtung (1) gemäß Anspruch 1 oder 2, **dadurch gekennzeichnet, dass** eine Kompensationssteuerungsvorrichtung (6) vorgesehen ist, welche den Aktuator (4) mit einem Kompensationssignal beaufschlagt, welches die vom Maschinenelement (2) auf die Wiegevorrichtung (3) übertragenen Vibrationsschwingungen reduziert.

4. Befüllvorrichtung (1) gemäß Anspruch 3, **dadurch gekennzeichnet, dass** die Kompensationssteuerungsvorrichtung (6) ein von einem Vibrationssensor (5) gemessenes Vibrationssignal der von dem Maschinenelement (2) ausgeführten Vibrationsschwingungen zur Grundlage der Bestimmung des Kompensationssignals macht.

5. Befüllvorrichtung (1) gemäß Anspruch 4, **dadurch gekennzeichnet, dass** die Kompensationssteuerungsvorrichtung (6) dazu eingerichtet ist, das Vibrationssignal mit einer veränderten Phasenlage, bevorzugt um 180° phasenverschoben, als Kompensationssignal zu verwenden.

6. Befüllvorrichtung (1) gemäß einem der Ansprüche 3 bis 5, **dadurch gekennzeichnet, dass** die Kompensationssteuerungsvorrichtung (6) dazu eingerichtet ist, das Vibrationssignal bezüglich der vorliegenden Störfrequenzen zu analysieren, bevorzugt mittels einer FFT-Analyse, und das Kompensationssignal auf Grundlage der analysierten Störfrequenzen zu bestimmen.

7. Befüllvorrichtung (1) gemäß einem der Ansprüche 3 bis 6, **dadurch gekennzeichnet, dass** die Kompensationssteuerungsvorrichtung (6) einen Tiefpassfilter derart umfasst, dass das Vibrationssignal und/oder das Kompensationssignal den Tiefpassfilter durchläuft.

8. Befüllvorrichtung gemäß einem der Ansprüche 3 bis 7, **dadurch gekennzeichnet, dass** die Kompensationssteuerungsvorrichtung (6) das Kompensationssignal bezüglich seiner Phase, seiner Frequenz sowie seiner Amplitude dem von dem Maschinenelement 2 ausgeführten Vibrationsmuster invers bestimmt.

9. Verfahren zum Befüllen von Behältern, bevorzugt zum Befüllen von Getränkebehältern, wie Glasbehälter, Kunststoffbehälter, Dosen und/oder Kartonagen, mit einer Befüllvorrichtung (1), wobei die Befüllvorrichtung (1) mindestens ein Maschinenelement (2) sowie eine an dem Maschinenelement (2) angeordnete Wiegevorrichtung (3) zum Wiegen des Behälters umfasst,
**dadurch gekennzeichnet, dass**
eine mechanische Schwingung zur Vibrationskompensation zwischen dem Maschinenelement (2) und der Wiegevorrichtung (3) eingeleitet wird.

10. Verfahren gemäß Anspruch 9, **dadurch gekennzeichnet, dass** die Vibrationsschwingungen des Maschinenelements (2) gemessen werden und auf Grundlage des gemessenen Vibrationssignals ein Kompensationssignal bestimmt wird, das als mechanische Schwingung zwischen dem Maschinenelement (2) und der Wiegevorrichtung (3) eingeleitet wird, um die vom Maschinenelement (2) auf die Wiegevorrichtung (3) übertragenen Vibrationsschwingungen zu reduzieren.

11. Verfahren gemäß Anspruch 10, **dadurch gekennzeichnet, dass** das Vibrationssignal mit einer veränderten Phasenlage, bevorzugt um 180° phasenverschoben, als Kompensationssignal verwendet wird.

12. Verfahren gemäß Anspruch 10 oder 11, **dadurch gekennzeichnet, dass** das Vibrationssignal bezüglich der vorliegenden Störfrequenzen analysiert wird, bevorzugt mittels einer FFT-Analyse, und das Kompensationssignal auf Grundlage der analysierten Störfrequenzen bestimmt wird.

13. Verfahren gemäß einem der Ansprüche 10 bis 12, **dadurch gekennzeichnet, dass** das Vibrationssignal und/oder das Kompensationssignal einen Tiefpassfilter durchläuft.

14. Verfahren gemäß einem der Ansprüche 10 bis 13, **dadurch gekennzeichnet, dass** das Kompensationssignal bezüglich seiner Phase, seiner Frequenz sowie seiner Amplitude dem von dem Maschinenelement (2) ausgeführten Vibrationsmuster invers bestimmt wird.
